# EUROPÄISCHE PATENTANMELDUNG

(11) **EP 4 401 169 A1**
(43) Veröffentlichungstag der Anmeldung: **17.07.2024**
(21) Anmeldenummer: 23151682.4
(22) Anmeldetag: 16.01.2023
(51) Int. Cl.: H01M 4/38, H01M 4/42, H01M 4/46, H01M 8/04007, H01M 8/04089, H01M 8/04082, H01M 8/0656, H01M 12/06, H01M 16/00

(54) **HYBRIDE ENERGIEQUELLE AUS EINER METALL-LUFT-BATTERIE UND EINER BRENNSTOFFZELLE**

(71) Anmelder: Technische Universität Berlin, 10623 Berlin (DE)
(72) Erfinder: Dr. MÜLLER, Sören, 12169 Berlin (DE); HEYDRICH-BODENSIECK, Janne Max, 12163 Berlin (DE)
(74) Vertreter: Hertin und Partner Rechts- und Patentanwälte PartG mbB

(57) **Zusammenfassung**

Die Erfindung betrifft eine Energiequelle umfassend eine Metall-Luft-Batterie und eine Wasserstoff-Brennstoffzelle. Die Metall-Luft-Batterie und die Wasserstoff-Brennstoffzelle sind durch ein Fluidverbindungsmittel miteinander verbunden. Die Metall-Luft-Batterie weist eine Schaumanode auf. Es wird der Effekt der parasitären Korrosion an der Schaumanode genutzt, um den dadurch entstandenen Wasserstoff in die Wasserstoff-Brennstoffzelle einzuleiten.

Des Weiteren richtet sich die Erfindung an ein System umfassend einen Energiewandler und die erfindungsgemäße Energiequelle. Darüber hinaus betrifft die Erfindung in weiteren Aspekten Verwendungen der erfindungsgemäßen Energiequelle in einem Bayer-Verfahren im Kontext der Aluminiumherstellung und stationären, teilstationären und/oder dynamischen Anwendungen.

## Beschreibung

Die Erfindung betrifft eine Energiequelle umfassend eine Metall-Luft-Batterie und eine Wasserstoff-Brennstoffzelle. Die Metall-Luft-Batterie und die Wasserstoff-Brennstoffzelle sind durch ein Fluidverbindungsmittel miteinander verbunden. Die Metall-Luft-Batterie weist eine Schaumanode auf. Es wird der Effekt der parasitären Korrosion an der Schaumanode genutzt, um den dadurch entstandenen Wasserstoff in die Wasserstoff-Brennstoffzelle einzuleiten.

Des Weiteren richtet sich die Erfindung an ein System umfassend einen Energiewandler und die erfindungsgemäße Energiequelle. Darüber hinaus betrifft die Erfindung in weiteren Aspekten Verwendungen der erfindungsgemäßen Energiequelle in einem Bayer-Verfahren im Kontext der Aluminiumherstellung und stationären, teilstationären und/oder dynamischen Anwendungen.

### Hintergrund und Stand der Technik

Im derzeitigen Stand der Technik gibt es ein überaus großes Spektrum an Energiequellen, die unterschiedlichen Anwendungszwecken gewidmet sind. Die Nutzung von Energiequellen, wie z. B. von herkömmliche Batterien, ist aus dem Alltag nicht mehr wegzudenken. Andere Energiequellen und/oder deren Nutzung sind immer noch Gegenstand aktueller Forschung und Entwicklung. Neben den forschungs- und entwicklungstechnischen Punkten spielen auch Wirtschaftsinteressen sowie Umwelt- und Klimaaspekte im Rahmen der Bereitstellung moderner Energiequellen immer mehr eine größere Rolle.

In der Automobilindustrie ist die Lithium-Ionen-Batterie (häufig auch abgekürzt mit Li-lon-Batterie) die meistverwendete Technologie in Batterie betriebenen Fahrzeugen (BEV, englisch: battery electric vehicle). Durch stetige Weiterentwicklung liegt ihre praktisch auf Zellebene erreichbare gravimetrische Energiedichte aktuell zwischen 100 und 200 Wh/kg (Wattstunden pro Kilogramm) und beträgt damit ungefähr ein Zehntel im Vergleich zu konventionellen Kraftstoffen (siehe Girishkumar et al. (2010)).

Schwere Batterien und kleine Reichweiten sind die Folge. Zudem ist die Gewinnung von Lithium energieaufwendig und ökologisch wie gesellschaftlich fragwürdig. Leichtmetall-Luft-Batterien, wie z. B. Aluminium-Luft und Magnesium-Luft, aber auch Zink-Luft-Batterien, sind Energiespeicher mit einer hohen gravimetrischen Energiedichte. Sie nutzen den Luftsauerstoff aus der Umgebung als Reaktionspartner, was ein offenes Zelldesign ermöglicht und somit auch das Gewicht der Batterie absenkt, was folglich höhere Reichweiten ermöglicht (siehe Armand & Tarascon (2008)).

Die besonders hohen theoretischen Energiedichten von Magnesium- und Aluminium-Luft-Batterien (Mg/O₂ 6800 Wh/kg (Zhang, Tao & Chen (2014)), Al/O₂ 8100 Wh/kg (Elia et al. (2016)) verdeutlichen das enorme Potential dieser Technologie im Vergleich zu den Li-lon-Batterien. Leichtmetall-Luft-Batterien umfassen eine Leichtmetallanode, einen Elektrolyten und eine Gasdiffusionselektrode (GDE) als Kathode. Die Anode im Elektrolyten wird oxidiert und die Kathode reduziert. Die in der Anode freiwerdenden Elektronen können auf ihrem Weg über einen externen Verbraucher zur Kathode genutzt werden.

Die elektrochemische Reaktion innerhalb der Magnesium-Luft- und der Aluminium-Luft-Batterie kann wie folgt dargestellt werden (Rahman, Wen & Wang (2013)):
**Magnesium-Luft-Batterie:**

| | | |
|---|---|---|
| Anode: | 2 Mg + 4 OH- → 2 Mg (OH)₂ + 3 e⁻ | (Potential von E₀ = - 2,69 V) |
| Kathode: | O₂ + 2 H₂O + 4 e⁻ → 4 OH⁻ | (Potential von E₀ = 0,40 V) |
| Gesamt: | 2 Mg + O₂ + 2 H₂O → 2 Mg (OH)₂ | (Potential von E_{ges} = 3,09 V) |

**Aluminium-Luft-Batterie:**

| | | |
|---|---|---|
| Anode: | 2 Mg + 4 OH- → Al (OH)₄⁻ + 3 e⁻ | (Potential von E₀ = - 2,34 V) |
| Kathode: | O₂ + 2H₂O + 4e⁻→ 4 OH⁻ | (Potential von E₀ = 0,40 V) |
| Gesamt: | 4 Al + 3 O₂ + 6 H₂O → 4 Al (OH)₃ | (Potential von E_{ges} = 2,74 V) |

Eine der Herausforderungen bei Leichtmetall-Luft-Batterien ist die sogenannte parasitäre Korrosion, welche die Wasserstoffbildung beim Entladen der Batterie bezeichnet. Einige der bei der Oxidation an der Anode freiwerdenden Elektronen reduzieren lokal Wasser zu Wasserstoff, anstatt die Anode durch den externen Kreislauf zu verlassen (siehe hierzu z. B. Egan et al. (2013), Cho et al. (2015) und Zhang, Tao & Chen (2014)). Demnach geht elektrische Ladung für einen externen Verbraucher verloren. Verunreinigungen, besonders Eisen, Kupfer und Nickel, können die Wasserstoffbildung verstärken, da sie sich wie lokale Kathoden zur Wasserstoffbildung verhalten. Sekundäraluminium eignet sich daher bislang nicht als Anodenmaterial, so dass überwiegend hochreine Werkstoffe (≥99,99) sowohl pur als auch als Basis für eine Legierung als Anodenmaterial verwendet werden. Das steigert den Energie- und Kostenaufwand zur Herstellung jedoch enorm. Hinzu kommt die geringe Anzahl an Lieferanten und somit auch der geringen Verfügbarkeit von hochreinen Leichtmetallwerkstoffen. Im Stand der Technik wird hierzu die praktische Energiedichte mit einigen 100 bis wenigen 1000 Wh/kg angegeben, je nach Belastung und Spannungsniveau (Fan, Lu & Leng (2015), Ma et al. (2011). Damit liegt sie oft deutlich unter dem oft als Faustformel angegebenen Drittel der theoretischen Energiedichte. Eine weitere Herausforderung stellt das Handling des entweichenden und leicht entzündlichen Wasserstoffes dar.

Eine ebenfalls im Stand der Technik bekannte Energiequelle stellt die Brennstoffzelle dar. Insbesondere Wasserstoff-Brennstoffzellen sind eine reife Technik, die bereits zuverlässig in vielen Bereichen ihren Einsatz finden. Dabei wird auf der Anoden-Seite Wasserstoff eingeleitet und auf der Kathoden-Seite Umgebungsluft. An der Anode wird der molekulare Wasserstoff (H₂) in Wasserstoffkerne (H⁺ bzw. Protonen) und Elektronen aufgespalten. Die Protonen wandern durch eine Elektrolytmembran, die nur für sie durchlässig ist, auf die Seite des Sauerstoffs. Die Elektronen wandern von der Anode durch einen elektrischen Leiter zur Kathode. Dieser Stromfluss kann beispielsweise einen Elektromotor antreiben. Auf der Kathoden-Seite verbinden sich Sauerstoff, Elektronen und H⁺-Ionen zu H₂O, also Wasser (Ehret (2018)).

Polymer-Elektrolyt-Brennstoffzellen (PEM) zum Beispiel kommen aufgrund ihrer hohen Leistungsdichte und Lastflexibilität (z. B. beschleunigen und abbremsen bei Fahrzeugen) sowohl stationär als auch bei BEVs zum Einsatz. Mit Betriebstemperaturen von ca. 80°C werden sie auch als Wärmequellen verwendet. Wasserstoff muss dafür jedoch vorab erzeugt und besonders bei mobilen Anwendungen unter hohen Sicherheitsbedingungen bereitgestellt werden. Ein erhöhter Energieaufwand und die damit verbundenen Kosten erschweren es dieser Technologie mit den herkömmlichen fossilen Brennstoffen zu konkurrieren - und das trotz einem COz-freien Betrieb.

Im Stand der Technik sind auch Ansätze bekannt, als Energiequelle eine Kombination einer Metall-Luft-Batterie und einer Wasserstoff-Brennstoffzelle zu nutzen. So wird in Wang et al. (2013) eine hybride Energiequelle offenbart, die zwei Halbzellen aufweist, nämlich eine Aluminium-Luft-Zelle sowie eine H₂-Luft-Zelle. Beide Halbzellen sind elektrochemisch miteinander verbunden. Ferner sind die beiden Halbzellen in einem alkalibeständigen Polymer bzw. Polymerblock eingebettet. Das Polymer wurde mittels 3D-Rapid-Prototyping bereitgestellt. Eine Aluminiumplatte, die sich am unteren Ende des Polymerblocks befindet, dient als Anode für die Aluminium-Luft-Zelle und als Wasserstoffquelle für die Wasserstoff-Luft-Zelle, wobei dazu der an der Aluminiumanode durch parasitäre Korrosion entstandene Wasserstoff genutzt wird.

Hinsichtlich der Energieausbeute der in Wang et al. (2013) offenbarten hybriden Energiequelle liegt jedoch ein Bedarf an Optimierung vor. Insbesondere vor dem Hintergrund, als potentielle Energiequelle für beispielsweise Fortbewegungsmittel, wie z. B. Autos, genutzt werden zu können, ist keine notwendige Effizienz gegeben. Darüber hinaus weist die in Wang et al. (2013) offenbarte Energiequelle eine strukturelle Inflexibilität durch die Einbettung der Halbzellen in dem Polymerblock auf. Mithin liegt im Stand der Technik ein Bedarf an Optimierung bekannter Energiequellen vor.

### Aufgabe der Erfindung

Aufgabe der Erfindung war es, die aus dem Stand der Technik bekannten Nachteile gängiger Energiequellen zu beseitigen. Insbesondere sollte die Energiequelle eine höhere Energieausbeute ermöglichen. Ferner sollte die Energiequelle kostengünstig bereitstellbar sein sowie natürliche Ressourcen schonen. Weiterhin sollte die Energiequelle über eine vielseitige Anwendungstauglichkeit verfügen.

### Zusammenfassung der Erfindung

Die erfindungsgemäße Aufgabe wird gelöst durch die unabhängigen Ansprüche. Bevorzugte Ausführungsformen der Erfindung sind in den abhängigen Ansprüchen offenbart.

In einem ersten Aspekt betrifft die Erfindung vorzugsweise eine Energiequelle umfassend
- eine Metall-Luft-Batterie und
- eine Wasserstoff-Brennstoffzelle,
dadurch gekennzeichnet, dass die Metall-Luft-Batterie eine Schaumanode aufweist und ein Fluidverbindungsmittel zwischen der Metall-Luft-Batterie und der Wasserstoff-Brennstoffzelle vorliegt, sodass ein an der Schaumanode durch parasitäre Korrosion entstandener Wasserstoff in die Wasserstoff-Brennstoffzelle einführbar ist.

Die erfindungsgemäße Energiequelle hat sich in einer Vielzahl von Aspekten als besonders vorteilhaft erwiesen.

Es ist ein überraschender Vorteil, dass der Wirkungsgrad der Energiequelle durch die Nutzung der parasitären Korrosion an der Schaumanode der Metall-Luft-Batterie besonders hoch ist. Wie weiter oben angeschnitten, zeichnet sich die parasitäre Korrosion dadurch aus, dass an der Anode Wasserstoff entsteht. Dies kann beispielsweise durch eine chemische Reaktion mit Wasser aus dem Elektrolyten erfolgen. Beim beispielhaften Einsatz von Aluminium als Schaumanode kann die parasitäre Korrosion durch die Reaktionsgleichung

AI + 3 H₂O + OH⁻ → 3/2 H₂ + Al(OH)⁻₄

beschrieben werden.

Isoliert betrachtet, ist die parasitäre Korrosion für die Metall-Luft-Batterie ein nachteiliger Effekt, da an der Anode freiwerdende Elektronen für die lokale Oxidation zu Wasserstoff verbraucht werden, die jedoch für den elektrischen Verbraucher genutzt werden könnten. Im erfindungsgemäßen Kontext wird jedoch der für sich genommen nachteilige Effekt der Wasserstoffbildung gemäß der parasitären Korrosion genutzt, um in die Wasserstoff-Brennstoffzelle eingeleitet und dort genutzt zu werden. Da die Schaumanode eine Porenstruktur aufweist, ist eine höhere Fläche verfügbar, die für die Wasserstoffbildung einsetzbar ist. Demnach ist auch ein höherer Anteil an Wasserstoff ausgehend von der Metall-Luft-Batterie in die Wasserstoff-Brennstoffzelle einleitbar.

Die Erfinder kamen durch lange und intensive Forschungsbemühungen auf die Lösung der erfinderischen Aufgabe. Es war keineswegs naheliegend, eine Metall-Luft-Batterie mit einer Schaumanode in Kombination mit einer Wasserstoff-Brennstoffzelle bereitzustellen und den Effekt der parasitären Korrosion als Wasserstoffquelle für die Wasserstoff-Brennstoffzelle zu nutzen. Im Stand der Technik wurde gelehrt, in Metall-Luft-Batterien Anoden einzusetzen, die mit einer geringen Wasserstoffproduktion einhergehen. So wurden typischerweise hochreine Anodenwerkstoffe verwandt, um die Wasserstoffproduktion niedrig zu halten. Im erfindungsgemäßen Kontext ist jedoch eine hohe Wasserstoffproduktion an der Anode der Metall-Luft-Batterie bedeutsam, was durch den Einsatz der Schaumanode hervorgebracht wird. Insbesondere ist die überaus hohe Wasserstoffproduktion durch die höhere Fläche der Schaumanode bedingt. Durch das Fluidverbindungsmittel wird der hohe Anteil an Wasserstoff, der durch den Effekt der parasitären Korrosion entsteht, von der Schaumanode der Metall-Luft-Batterie in die Wasserstoff-Brennstoffzelle eingeleitet.

Mittels reinen oder hochreinen Anodenwerkstoffen wird es zwar ermöglicht, die Wasserstoffproduktion auf einem niedrigen Niveau zu halten, jedoch sind diese mit hohen und aufwendigen Kosten und Maßnahmen verbunden. Insbesondere ist die Herstellung von reinen oder hochreinen Werkstoffen prozessineffizient. Vorteilhafterweise werden die ineffizienten Aspekte in Bezug auf reine oder hochreine Anodenwerkstoffe durch die bevorzugte Energiequelle beseitigt. So können auch weniger reine Anodenwerkstoffe für die Schaumanode verwandt werden, die eine hohe Wasserstoffproduktion ermöglichen und wiederrum für den Betrieb der Wasserstoff-Brennstoffzelle von Vorteil sind.

Die bevorzugte Energiequelle weist ebenfalls den Vorteil auf, dass unter anderem durch die Porenstruktur der Schaumanode die Wasserstoffproduktion regulierbar ist und mithin auch der Wirkungsgrad der Energiequelle optimiert werden kann. So kann ein höherer Anteil an Wasserstoff durch parasitäre Korrosion entstehen, der als Brennstoff für die Wasserstoff-Brennstoffzelle eingeleitet wird, wenn die Fläche der Schaumanode an der Metall-Luft-Batterie vergrößert wird. Die Fläche der Schaumanode geht mit der Porenstruktur einher. Die Porenstruktur der Schaumanode umfasst den Porenanteil, die Art, Form, Größe und/oder Verteilung der Poren. Mithin ist durch die Wahl der Porenstruktur auch die Fläche der Schaumanode, demzufolge die Menge an produzierbarem Wasserstoff und damit auch die Menge an einzuleitendem Wasserstoff in die Wasserstoff-Brennstoffzelle einstellbar. Somit wird auch vorteilhafterweise die Lebensdauer der Wasserstoff-Brennstoffzelle höher, da mehr Wasserstoff als Brennstoff zur Verfügung gestellt werden kann. Nicht nur durch die Porenstruktur, jedoch auch durch die Wahl des Materials der Schaumanode kann Einfluss auf die Menge an Wasserstoff genommen werden, welche durch parasitäre Korrosion entsteht und in die Wasserstoff-Brennstoffzelle einleitbar ist. Wie weiter oben erwähnt, kann dies insbesondere durch den Reinheitsgrad des verwendeten Materials der Schaumanode reguliert werden.

Darüber hinaus weist die bevorzugte Energiequelle den Vorteil auf, dass sie mit einer niedrigeren Masse einhergeht. Insbesondere durch die Poren der Schaumanode, d. h. durch die Leerbereiche der Schaumanode, welche die Poren bereitstellen, liegen Bereiche vor, in denen kein Material der Schaumanode vorliegt. Durch die Poren bzw. das fehlende Material liegt eine geringere Masse als ein Vollmaterial vor. Durch die geringere Masse eignet sich die bevorzugte Energiequelle besonders gut in einer Vielzahl von Anwendungen. So kann unter anderem durch die geringere Masse eine höhere Reichweite beim Einsatz der bevorzugten Energiequelle in Fortbewegungsmittel erreicht werden. Weiterhin ist die geringere Masse auch bei der Distribution und Belieferung von stationären Anwendungen vorteilhaft. An sich eignet sich die bevorzugte Energiequelle vorteilhafterweise in stationären, teilstationären und/oder dynamischen Anwendungen bzw. Vorrichtungen, welche im Folgenden noch näher beleuchtet werden. Von Vorteil ist auch, dass die bevorzugte Energiequelle unabhängig davon funktionsfähig ist, welche semipermeable Membran an der Wasserstoff-Brennstoffzelle eingesetzt wird.

Die Komponenten der bevorzugten Energiequelle umfassend eine Metall-Luft-Batterie, eine Wasserstoff-Brennstoffzelle und ein Verbindungsmittel sind kostenwirksam zu erwerben. Ferner erfordert es keinen hohen Aufwand, die erfindungsgemäße Energiequelle durch die bevorzugten Komponenten bereitzustellen. Eine überaus schnelle Aufbereitung der Energiequelle ist möglich, was die Effizienz der Energiequelle nochmals erhöht.

Im erfindungsgemäßen Kontext bezeichnet die Energiequelle die Vorrichtung, welche durch die Metall-Luft-Batterie und die Wasserstoff-Brennstoffzelle bereitstellbar ist, wobei ein Fluidverbindungsmittel zwischen der Metall-Luft-Batterie vorliegt. Ferner weist dabei die Metall-Luft-Batterie eine Schaumanode auf, wobei dabei durch parasitäre Korrosion lokal entstehender Wasserstoff durch das Fluidverbindungsmittel in die Wasserstoff-Brennstoffzelle eingeleitet wird. Der durchschnittliche Fachmann weiß, dass für sich genommen sowohl eine Metall-Luft-Batterie als auch eine Wasserstoff-Brennstoffzelle als einzelne Energiequellen bewertet werden können. Die Erfindung richtet sich jedoch auf die Kombination der Metall-Luft-Batterie und der Wasserstoff-Brennstoffzelle. Daher kann für erfindungsgemäße Energiequelle analog auch der Begriff der hybriden Energiequelle verwandt werden. Daher richtet sich die Erfindung auch auf eine hybride Energiequelle umfassend eine Metall-Luft-Batterie und eine Wasserstoff-Brennstoffzelle, dadurch gekennzeichnet, dass die Metall-Luft-Batterie eine Schaumanode aufweist und ein Fluidverbindungsmittel zwischen der Metall-Luft-Batterie und der Wasserstoff-Brennstoffzelle vorliegt, sodass ein an der Schaumanode durch parasitäre Korrosion entstandener Wasserstoff in die Wasserstoff-Brennstoffzelle einführbar ist.

Die Wasserstoff-Brennstoffzelle dient der Verstromung von Wasserstoff (H₂). Dazu wird Wasserstoff als Brennstoff und Sauerstoff (O₂) als Oxidationsmittel verwandt. Auf der Seite der Anode findet die Oxidation statt. Dabei wird der Wasserstoff an der Anode oxidiert und in Kationen umgewandelt. Die Ionen wandern durch die Membran, die Anode und Kathode trennt, während die Elektronen über den Stromfluss zur Kathode geführt werden. Auf der Seite der Kathode findet die Reduktion statt. Sauerstoff, der hier als Oxidationsmittel eingesetzt wird, reduziert an der Katode und wird zu Anionen umgewandelt. Sie reagieren unmittelbar mit den Wasserstoffionen zu Wasser.

Eine Metall-Luft-Batterie bezeichnet eine Batterie, bei der elektrische Energie aus der chemischen Reaktion von Metallen mit Sauerstoff freigesetzt wird. Dabei wird vorzugsweise der Sauerstoff aus der Umgebungsluft gewonnen. Wie üblich, weist die die Metall-Luft-Batterie eine Kathode und eine Anode auf, wobei die Kathode vorzugsweise als Gasdiffusionselektrode vorliegt. Die Anode weist bevorzugt einen Luftkontakt auf. Beim Entladen wird an der Anode Sauerstoff aus der Luft reduziert, beim Laden oxidiert. Dieser verbindet sich dann mit den MetallIonen, die in der Kathode oxidiert werden und durch den Elektrolyten zur Anode wandern. Die Anode der Metall-Luft-Batterie liegt im erfindungsgemäßen Kontext als Schaumanode vor.

Eine Schaumanode bezeichnet eine Anode, welche als Schaum ausgestaltet ist. Da die Anode vorzugsweise als Metall vorliegt, ist die Schaumanode ein Metallschaum. Die Schaumanode weist eine Porenstruktur auf. Vorzugsweise ist die Schaumanode im Wesentlichen dreidimensional ausgestaltet, weist also Dimensionen in Länge, Breite und Höhe auf.

Der Effekt der parasitären Korrosion wurde bereits weiter oben beschrieben. Der Vollständigkeit halber sei erwähnt, dass dieser Effekt eine unerwünschte Wasserstoffproduktion bezeichnet, die lokal an der Anode der Metall-Luft-Batterie stattfindet. Für sich genommen wird der Effekt der parasitären Korrosion als nachteilig für Metall-Luft-Batterien bewertet. Die lokale Entstehung von Wasserstoff an der Anode meint, dass in einem Bereich oder in einer Umgebung der Anode der Metall-Luft-Batterie Wasserstoff entsteht. Dies wird bedingt durch an der Anode freiwerdende Elektronen, die, anstatt die Anode durch den externen Kreislauf zu verlassen, lokal Wasser zu Wasserstoff reduzieren.

Im erfindungsgemäßen Kontext ist es vorgesehen, den für sich genommen nachteiligen Effekt der parasitären Korrosion für die Wasserstoffbereitstellung der Wasserstoff-Brennstoffzelle zu nutzen. Dazu liegt ein Fluidverbindungsmittel zwischen der Metall-Luft-Batterie und der Wasserstoff-Brennstoffzelle vor.

Das Fluidverbindungsmittel bezeichnet eine Vorrichtung, mit der der durch parasitäre Korrosion entstandene Wasserstoff, der gasförmig ist, aus der Metall-Luft-Batterie in die Wasserstoff-Brennstoffzelle eingeleitet wird. Demnach liegt eine Fluidverbindung zwischen der Metall-Luft-Batterie und der Wasserstoff-Brennstoffzelle durch das Fluidverbindungsmittel vor. Ein erstes Ende des Fluidverbindungsmittels ist vorzugsweise in einer Umgebung der Schaumanode der Metall-Luft-Batterie angebracht. Ebenfalls kann es bevorzugt sein, das erste Ende des Fluidverbindungsmittels in direktem Kontakt mit der Schaumanode der Metall-Luft-Batterie zu bringen. Ein zweites Ende des Fluidverbindungsmittels liegt vorzugsweise in einer Umgebung der Anode der Wasserstoff-Brennstoffzelle vor. Ferner kann es bevorzugt sein, das zweite Ende des Fluidverbindungsmittels in direktem Kontakt mit der Anode der Wasserstoff-Brennstoffzelle zu bringen. Damit wird es ermöglicht, dass der Wasserstoff an der Anode der Wasserstoff-Brennstoffzelle oxidiert.

In einer weiteren bevorzugten Ausführungsform ist die Energiequelle dadurch gekennzeichnet, dass die Schaumanode ein Material umfasst ausgewählt aus einer Gruppe umfassend Eisen oder ein Leichtmetall, wobei bevorzugt das Leichtmetall ausgewählt ist aus einer Gruppe umfassend Zink, Magnesium, Aluminium, Verbindungen und/oder Legierungen der genannten Leichtmetalle.

Die genannten Materialien haben sich vorteilhafterweise als besonders geeignet erwiesen, um für die Schaumanode der Metall-Luft-Batterie für die bevorzugte Energiequelle verwandt zu werden.

In einer bevorzugten Ausführungsform umfasst die Schaumanode als Material Eisen. Umfasst die Schaumanode Eisen, kann auch von einer Eisen-Luft-Batterie gesprochen werden. Da Eisen ein Element ist, welches in der Natur häufig vorkommt, z. B. in der Erdkruste, kann es vorteilhaft in besonders großen Mengen gefördert werden. Von Vorteil ist auch, dass es zu keinen Versorgungsengpässen kommen wird. Vielmehr ist ein erheblicher Kostenvorteil gegeben, was mit einer erheblichen Wirtschaftseffizienz einhergeht.

In einer weiteren bevorzugten Ausführungsform umfasst die Schaumanode ein Material umfassend ein Leichtmetall. Vorzugsweise ist das Leichtmetall ausgewählt ist aus einer Gruppe umfassend Zink, Magnesium, Aluminium, Verbindungen und/oder Legierungen der genannten Leichtmetalle.

Zink-Luft-Batterien sind vorteilhaft besonders kostengünstig, umweltverträglich und kompakt, was sich entsprechend auch auf die bevorzugte Energiequelle überträgt. Magnesium-Luft-Batterien weisen vorteilhaft eine hohe Kapazität auf und verfügen ebenfalls einen hohen Kostenvorteil, da Magnesium in ausreichenden Mengen vorhanden ist. Aluminium-Luft-Batterien zeichnen sich durch eine besonders hohe Leistungsdichte aus, was sich ebenfalls vorteilhafterweise auf die bevorzugte Energiequelle überträgt.

Von besonderem Vorteil beim Einsatz einer Aluminium-Luft-Batterie ist auch, dass Sekundäraluminium für die Schaumanode verwandt werden kann. Sekundäraluminium bezeichnet ein Aluminium, welches durch Umschmelzen von Schrott entstanden ist. Dabei ist es unerheblich, ob es sich dabei um Neuschrott aus einer laufenden Aluminiumproduktion handelt oder um Altschrott aus bereits gebrauchten Aluminium-Produkten (Recycling). Da Sekundäraluminium unreiner ist als Primäraluminium (Aluminium, das durch aus Aluminiumoxid erzeugt wird, welches man seinerseits aus dem Aluminium-Erz Bauxit gewinnt; das "primär" bezeichnet die Tatsache, dass das Aluminium direkt aus dem Rohstoff, also erstmals rein hergestellt worden ist), wird vorteilhafterweise eine höhere Wasserstoffproduktion bewirkt.

Darüber hinaus eignen sich die genannten Materialien für Verfahren, mit denen eine Schaumanode hergestellt werden kann, beispielsweise additive Verfahren, Sintern, Replikationsverfahren, Strangpressen etc.

Mittels Legierungen und/oder Verbindungen der aufgezählten Materialien für die Schaumanode lässt sich vorteilhaft die parasitäre Korrosion und damit die Entstehung von Wasserstoff regulieren. So kann vorteilhaft eine Selbstkorrosion der Schaumanode verringert und die Oxidationsrate erhöht werden. Vorzugsweise wird dazu ein Legierungspartner oder mehrere Legierungspartner verwandt, welche eine geringe Schmelztemperatur aufweisen im Vergleich zum verwendeten Metall oder Leichtmetall, eine höhere Edelwertigkeit (englisch: nobility) aufweisen, in dem verwandten Elektrolyt löslich und/oder ein hohes Wasserstoffüberpotential aufweisen, insbesondere für Aluminium für die Schaumanode.

In einer weiteren bevorzugten Ausführungsform ist die Energiequelle dadurch gekennzeichnet, dass die Schaumanode einen Reinheitsgrad aufweist zwischen ca. 80 - 100 %, bevorzugt zwischen ca. 97 - 99 %, besonders bevorzugt zwischen ca. 99 - 99,9 %, ganz besonders bevorzugt von ca. 99,5 %.

Der Reinheitsgrad bezeichnet die Angabe des Gehaltes an Einschlüssen, die einen Einfluss auf die Eigenschaften der Schaumanode haben. Mit Einschlüssen können beispielsweise Fremdmaterialien gemeint sein.

Für die Wasserstoff-Brennstoffzelle als solche gilt, dass je unreiner die Schaumanode ist, desto mehr Wasserstoff wird produziert bzw. umgesetzt. Für die Metall-Luft-Batterie wiederrum gilt, dass bei einem höheren Reinheitsgrad mehr elektrische Energie vorliegt. Die genannten Angaben haben sich dahingehend als vorteilhaft erwiesen, dass ein Kompromiss zwischen der Umsetzung an Wasserstoff sowie verfügbarer elektrischer Energie eingegangen werden kann.

Vorteilhafterweise deckt der Reinheitsgrad von ca. 80 - 100 % eine besonders hohe Anzahl an Materialien, insbesondere Legierungen, ab, die im erfindungsgemäßen Kontext vorzugsweise für die Schaumanode eingesetzt werden können.

Begriffe wie im Wesentlichen, ca. etc. beschreiben bevorzugt einen Toleranzbereich von weniger als ± 20 %, bevorzugt weniger als ± 10 %, noch stärker bevorzugt weniger als ± 5 % und insbesondere weniger als ± 1 %. Angaben von im Wesentlichen, ca. etc. offenbaren und umfassen stets auch den exakten genannten Wert.

In einer weiteren bevorzugten Ausführungsform ist die Energiequelle dadurch gekennzeichnet, dass die Schaumanode eine mittlere Stegdicke aufweist zwischen ca. 0,1 - 5 mm, bevorzugt zwischen ca. 0,1 - 1 mm, besonders bevorzugt zwischen ca. 0,1 - 0,5 mm, ganz besonders bevorzugt von ca. 0,3 mm.

Stege bezeichnen im erfindungsgemäßen Kontext Abschnitte der Schaumanode, die die Poren umranden. Die mittlere Stegdicke bezeichnet vorzugsweise den Mittelwert der Stegdicke.

Generell werden die physikalischen, insbesondere die mechanischen Eigenschaften, der Schaumanode durch die Dichte, Porosität, Porengröße und/oder Stegdicke bestimmt, insbesondere durch deren wechselseitigen Beziehungen. Die genannten Stegdicken haben sich dahingehend als vorteilhaft erwiesen, dass sie der Schaumanode für den erfindungsgemäßen Kontext eine hinreichende Stabilität verleihen. Mithin wird vorteilhaft die Robustheit der Schaumanode gesteigert, sodass eine besonders vibrationsarme Energiequelle bereitstellbar ist. Gleichzeitig wird es durch die genannten Stegdicken ermöglicht, den Poren eine derartige Struktur zu verleihen, dass eine besonders große Oberfläche zur Verfügung gestellt und damit auch mehr Wasserstoff produziert werden kann.

In einer weiteren bevorzugten Ausführungsform ist das Fluidverbindungsmittel ein Schlauch.

Ein Schlauch ist vorteilhaft kostengünstig erwerbbar sowie einfacher anpassbar, um eine fluidische Verbindung zwischen der Wasserstoff-Brennstoffzelle und Metall-Luft-Batterie bereitzustellen. So lässt sich der Schlauch individuell verbiegen und unaufwendig kürzen und/oder verlängern. Mithin begünstigt die Verwendung eines Schlauches die Verwendungsmöglichkeiten der bevorzugten Energiequelle. Darüber hinaus ist die Flexibilität von Schläuchen für die bevorzugte Energiequelle vorteilhaft, um beispielsweise für Druckschwankungen eine Biegsamkeit zu haben und damit eine dauerhafte Funktionsbeständigkeit gewährleisten zu können.

Ferner lassen sich auch weitere Komponenten, die insbesondere die Zuverlässigkeit für den Betrieb der bevorzugten Energiequelle fördern, einfach in einen Schlauch einbringen. Bevorzugt weist die Energiequelle ein Drucküberwachungsmittel auf. Besonders bevorzugt liegt das Drucküberwachungsmittel am Fluidverbindungsmittel vor, vorzugsweise am Schlauch. Hierdurch kann der Druck des Wasserstoffes, welcher gasförmig ist und in die Wasserstoff-Brennstoffzelle überführt wird, überwacht werden. Bei ungeeigneten Druckwerten können demzufolge Maßnahmen ergriffen werden, um die Funktionalität der Energiequelle weiterhin gewährleisten zu können.

In einer weiteren bevorzugten Ausführungsform ist die Energiequelle dadurch gekennzeichnet, dass die Energiequelle eine Fluidsteuerungseinheit aufweist, wobei die Fluidsteuerungseinheit am Verbindungsmittel, zwischen dem Verbindungsmittel und der Luft-Metall-Batterie und/oder zwischen dem Verbindungsmittel und der Wasserstoff-Brennstoffzelle vorliegt, wobei bevorzugt die Fluidsteuerungseinheit ausgewählt ist aus einer Gruppe umfassend einen gasdurchlässige und flüssigkeitsdichte Membran, ein Ventil und/oder eine erste Pumpe.

Eine Fluidsteuerungseinheit bezeichnet eine Komponente der Energiequelle, mit der es ermöglicht wird, die Strömung als solche und/oder Strömungsparameter des Wasserstoffes aus der Metall-Luft-Batterie in die Wasserstoff-Brennstoffzelle zu regulieren. Vorteilhafterweise wird hierdurch eine optimale Einfuhr des Wasserstoffes in die Wasserstoff-Brennstoffzelle sichergestellt. Beispielsweise kann hierzu eine Strömungsgeschwindigkeit und/oder die Menge des zugeführten Wasserstoffes optimiert werden.

So kann es bevorzugt sein, dass die Fluidsteuerungseinheit als eine Membran vorliegt, die gasdurchlässig und flüssigkeitsdicht ist. Vorteilhafterweise kann hierdurch eine Einführung des Wasserstoffes in die Wasserstoff-Brennstoffzelle ermöglicht und gleichzeitig die Einfuhr des Elektrolyts der Metall-Luft-Batterie vermieden werden. Dies ist insbesondere dahingehend von Vorteil, dass durch den Elektrolyten evtl. weitere chemische Reaktionen stattfinden könnten, die die Leistung der Wasserstoff-Brennstoffzelle und damit auch der bevorzugten Energiequelle verringern könnten. Vorteilhafterweise werden diese Reaktionen vermieden, indem eine gasdurchlässige und flüssigkeitsdichte Membran zum Einsatz kommt. Ein solche Membran kann beispielsweise, jedoch ohne Einschränkung, ein hydrophobes sowie mikroporöses Material aufweisen, beispielsweise PTFE (Polytetrafluorethylen) mit Mikroporen.

Vorzugsweise kann auch ein Ventil als Fluidsteuerungseinheit zum Einsatz kommen. Mittels des Ventils kann der Fluss des Wasserstoffes reguliert werden. Bei Bedarf wird es auch ermöglicht, den Wasserstofffluss zu stoppen. Dies kann besonders nützlich im Rahmen von Wartungen sein, beispielsweise für die Ausführung von Reinigungs- und/oder Reparaturen.

Vorzugsweise liegt eine erste Pumpe als Fluidsteuerungseinheit vor. Bei gasförmigen Fluiden, d. h. auch bei Wasserstoff, welcher für die Erfindung relevant ist, spricht man auch vom Gebläse oder von einem Verdichter. Das Gebläse erlaubt eine Strömung ohne nennenswerten Druck. Der Verdichter verdichtet den Wasserstoff auf einen höheren Druck. Mittels der ersten Pumpe kann insbesondere die Geschwindigkeit, mit der der Wasserstoff befördert wird, reguliert werden.

In einer bevorzugten Ausführungsform ist die erste Pumpe eine Schlauchpumpe. Bei einer Schlauchpumpe wird durch eine äußere mechanische Verformung des Schlauches der Wasserstoff hindurchgedrückt. Vorteilhaft wird hierdurch eine besonders genaue Dosierung des Wasserstoffes ermöglicht, welche in die Wasserstoff-Brennstoffzelle eingeführt werden soll. Des Weiteren wird eine im Wesentlichen gleichmäßige und stoßfreie Beförderung des Wasserstoffes ermöglicht, sodass eine optimale Einfuhr in die Wasserstoff-Brennstoffzelle erreicht wird. Mithin ist ein langanhaltender und zuverlässiger Betrieb der bevorzugten Energiequelle möglich.

In einer weiteren bevorzugten Ausführungsform ist die Energiequelle dadurch gekennzeichnet, dass die Metall-Luft-Batterie und die Wasserstoff-Brennstoffzelle als separate Komponenten vorliegen, wobei bevorzugt die separaten Komponenten räumlich getrennt voneinander angebracht sind.

Dass die Metall-Luft-Batterie und die Wasserstoff-Brennstoffzelle als separate Komponenten vorliegen, meint vorzugsweise, dass die Energiequelle mehrstückig aufbaubar ist. Insbesondere liegt eine Wirkverbindung zwischen der Metall-Luft-Batterie und der Wasserstoff-Brennstoffzelle in Form einer fluidischen Verbindung durch das Fluidverbindungsmittel vor. Vorzugsweise liegt keine elektrische Verbindung zwischen der Metall-Luft-Batterie und der Wasserstoff-Brennstoffzelle vor.

Bevorzugt sind die Metall-Luft-Batterie und die Wasserstoff-Brennstoffzelle räumlich getrennt voneinander angebracht. Damit liegen sie vorzugsweise nicht in einer räumlich festen Abtrennung vor, insbesondere nicht in einem Gehäuse.

Vorteilhafterweise kann durch die Separierung der Komponenten der bevorzugten Energiequelle ein gegenseitiger thermischer Einfluss und/oder chemische Korrelationseffekte vermieden werden. Mit dem thermischen Einfluss ist vorzugsweise die Wirkung der Wärme gemeint, die die Wasserstoff-Brennstoffzelle auf die Metall-Luft-Batterie haben kann, oder umgekehrt. So weisen Wasserstoff-Brennstoffzellen eine Temperatur von ca. 80°C auf, sodass eine Wirkung einer solch vergleichsweisen hohen Temperatur durch die Separierung der Komponenten verhindert wird. Mit chemischen Korrelationseffekten sind chemische Reaktionen und/oder Produkte gemeint, die sich auf den Betrieb der bevorzugten Energiequelle nachteilig auswirken könnten. Darüber hinaus ist die separierte Bauweise dahingehend von Vorteil, dass bei Versagen oder Leistungsminderung einer Komponente der Austausch leichter ausgeführt werden kann. Das hat wiederrum den Vorteil, dass das Zusammenspiel der aktuellsten Entwicklungsstände der jeweiligen Komponenten durch Austauschen und/oder Kombinieren erheblich erleichtert wird. Mithin geht insbesondere durch die separierte Bauweise eine Vielzahl von Vorteilen für die bevorzugte Energiequelle einher, die in ihrer Summe so nicht zu erwarten waren, sodass die technische Wirkung als synergistisch bewertet werden kann.

In einer weiteren bevorzugten Ausführungsform ist die Energiequelle dadurch gekennzeichnet, dass die Wasserstoff-Brennstoffzelle mit einem Wärmeleiter, bevorzugt einem Wärmetauscher, verbunden ist.

Ein Wärmeleiter bezeichnet im erfindungsgemäßen Kontext ein Mittel, mit dem die Wärme, die durch den Betrieb der Wasserstoff-Brennstoffzelle einhergeht, abgeführt werden kann. Als bevorzugter Wärmeleiter dient ein Wärmetauscher. Der Wärmetauscher ermöglicht eine Wärmeübertragung anhand eines Fluides, was sich im erfindungsgemäßen Kontext als besonders geeignet erwiesen hat, da dafür das Wasser aus der Wasserstoff-Brennstoffzelle verwendet werden kann.

Mittels des Wärmeleiters, bevorzugt des Wärmetauschers, kann die durch die Wasserstoff-Brennstoffzelle resultierende Wärme vorteilhafterweise dafür genutzt werden, um weitere Vorrichtungen mit Wärme zu versorgen. Mithin kann die bevorzugte Energiequelle nicht nur die Nutzung von elektrischer Energie, sondern auch die Nutzung von Wärmeenergie ermöglichen, sodass vorteilhaft vielseitige energietechnische Anwendungsoptionen gegeben sind. Beispielsweise kann die Wärme auf einen Heizkörper oder eine Heizung übertragen werden, um den Betrieb zu ermöglichen, beispielsweise bei Fortbewegungsmitteln wie Automobilen.

In einer weiteren bevorzugten Ausführungsform ist die Energiequelle dadurch gekennzeichnet, dass Energiequelle eine zweite Pumpe aufweist, wobei durch die Pumpe Sauerstoff in die Brennstoffzelle einführbar ist.

Mittels der zweiten Pumpe kann vorteilhafterweise die Zufuhr von Sauerstoff aus der Umgebung in die Wasserstoff-Brennstoffzelle optimiert werden. Wie weiter oben erwähnt, dient Sauerstoff als Oxidationsmittel für die Wasserstoff-Brennstoffzelle. Mit der Pumpe kann vorteilhafterweise die Menge an Oxidationsmittel bzw. Sauerstoff reguliert werden, was wiederrum für den Betrieb der bevorzugten Energiequelle nützlich sein kann.

In einem weiteren Aspekt betrifft die Erfindung vorzugsweise ein System umfassend einen Energiewandler und eine bevorzugte Energiequelle, wobei der Energiewandler und die Energiequelle miteinander wirkverbunden sind, wobei bevorzugt der Energiewandler ein Motor ist, besonders bevorzugt ein Elektromotor.

Ein Energiewandler meint eine Vorrichtung, die in der Lage ist, eine erste Energieform in eine zweite Energieform umzuwandeln. Ein Motor bezeichnet einen speziellen Energiewandler, der eine Energieform, beispielsweise, jedoch nicht darauf beschränkt, thermische, chemische, hydraulische, pneumatische und/oder elektrische Energie, in Bewegungsenergie umwandeln kann. Ein Elektromotor dient der Umwandlung von elektrischer Energie in Bewegungsenergie. Die Wirkverbindung meint hierbei eine derartige Verbindung, dass die durch die bevorzugte Energiequelle bereitgestellte Energie zum Energiewandler überführt werden kann. Dies kann beispielsweise über eine elektrische Verbindung erfolgen.

Vorteilhafterweise bietet die bevorzugte Energiequelle auch eine Antriebsmöglichkeit für Energiewandler, wie z. B. Motoren, insbesondere Elektromotoren. Insbesondere wird durch die Wasserstoff-Brennstoffzelle elektrischer Strom aus Wasserstoff durch die Umkehrung der Elektrolyse gewonnen. Der Wasserstoff und Luftsauerstoff (Sauerstoff aus der Umgebung) reagieren zu Wasser, wodurch elektrische Energie entsteht, die vorzugsweise für einen Elektromotor eingesetzt werden kann. Insbesondere erreichen Fortbewegungsmittel, in denen das bevorzugte System Anwendung finden kann, besonders hohe Reichweiten, da eine langanhaltende Wasserstoffversorgung der Wasserstoff-Brennstoffzelle durch die bevorzugte Energiequelle ermöglicht wird. Da die Energieerzeugung bzw. Energiebereitstellung im Wesentlichen klimaneutral erfolgt, ergibt sich eine erhebliche Verbesserung für einen klimafreundlicheren, energie- und leistungseffizienten Antrieb für Fortbewegungsmittel.

In einer weiteren bevorzugten Ausführungsform ist das System dadurch gekennzeichnet, dass das System einen Wärmeleiter, bevorzugt einen Wärmetauscher, aufweist, wobei eine Wasserstoff-Brennstoffzelle der Energiequelle mit dem Wärmeleiter, bevorzugt dem Wärmetauscher, verbunden ist.

Durch den Wärmeleiter, bevorzugt den Wärmetauscher, kann vorteilhafterweise die Wärmeenergie, die während des Betriebs der Energiequelle, insbesondere der Wasserstoff-Brennstoffzelle, resultiert, genutzt werden. Neben der Nutzung der elektrischen Energie kann somit auch die entstehende Wärmeenergie genutzt werden. Durch die Anbringung eines Wärmeleiters, vorzugsweise eines Wärmetauschers, kann die Übertragung der Wärmeenergie besonders zuverlässig und zielgerichtet erfolgen.

In einem weiteren Aspekt betrifft die Erfindung vorzugsweise eine Verwendung einer bevorzugten Energiequelle in einem Bayer-Verfahren zur Herstellung von Aluminium.

Das Bayer-Verfahren wird in der Aluminiumherstellung eingesetzt, wobei in einem Verfahrensschritt Aluminiumhydroxid zu Aluminiumoxid gebrannt werden muss. Vorteilhafterweise eignet sich die bevorzugte Energiequelle auch zur Verwendung im Bayer-Verfahren. Umfasst die Schaumanode Aluminium als Material, entsteht Aluminiumhydroxid, welches in dem Bayer-Verfahren direkt zugeführt werden kann, sodass vorteilhafterweise der Energieaufwand zum Brennen eingespart werden kann. Ferner kann auf die Produktion energieaufwendiger hochreiner Werkstoffe verzichtet werden, was ebenfalls von Vorteil hinsichtlich der Energieeffizienz ist. So wie die bevorzugte Energiequelle das recyclebare Entladeprodukt Aluminiumhydroxid für die Aluminiumherstellung bereitstellen und den Energieaufwand reduzieren kann, scheidet eine Wasserstoff-Brennstoffzelle Wasser aus. Mithin wird eine klimafreundliche, insbesondere COz-freie, Anwendung für eine klimafreundliche Energiegewinnung ermöglicht.

In einer weiteren bevorzugten Ausführungsform betrifft die Verwendung einer bevorzugten Energiequelle einen Betrieb einer stationären, teilstationären und/oder dynamischen Vorrichtung, wobei bevorzugt die stationäre Vorrichtung ausgewählt ist aus einer Gruppe umfassend ein Kraftwerk, ein Generator, ein Motor und/oder eine Batterie, wobei bevorzugt die teilstationäre Anwendung ein Baugerät ist, bevorzugt ein Kran und/oder ein Bagger, wobei bevorzugt die dynamische Vorrichtung ein Fortbewegungsmittel ist, bevorzugt ausgewählt aus einer Gruppe umfassend ein PKW, LKW und/oder Bus.

Somit sind für die bevorzugte Energiequelle besonders viele Anwendungsmöglichkeiten gegeben. Insbesondere ergeben sich viele Vorteile in der Elektromobilität, beispielsweise bei Zügen, Schiffen, PKWs, LKWs und/oder Bussen. Solche Vorrichtungen sind im erfindungsgemäßen Kontext den dynamischen Vorrichtungen zuzuordnen. Eine dynamische Vorrichtung bezeichnet eine Vorrichtung, mit der es ermöglicht wird, weite Strecken mit einem erhöhten, insbesondere auch beschleunigten Tempo, zurückzulegen. Mittels einer teilstationären Vorrichtung ist wie auch bei den dynamischen Vorrichtungen eine Fortbewegung möglich, jedoch ist die Zurücklegung von größeren Distanzen nicht der primäre Anwendungszweck. Zu den teilstationären Vorrichtungen sind die genannten Kräne und/oder Bagger zuzuordnen. Bei einer stationären Vorrichtung erfolgt vorzugsweise keine für sich genommene Fortbewegung, sodass dazu die genannten Kraftwerke, Notfallgeneratoren, Batterien (als Reservebatterien) etc. gehören.

Insbesondere Leichtmetall als Material für die Schaumanode der Metall-Luft-Batterie als neuer Energiespeicher bietet eine innovative Technologie, um den Anteil erneuerbarer Energien an der Gesamtenergiebilanz zu erhöhen, da Überproduktionen oder Versorgungslücken durch die Zwischenspeicherung im Leichtmetall geschlossen werden können.

Gerade im wachsenden Bereich der Elektromobilität, aber auch in stationären Vorrichtungen bzw. Anwendungen, wird vorteilhafterweise der COz-Ausstoß deutlich verringert. Zudem wird vorteilhaft die Abhängigkeit von erschöpflichen fossilen Kraftstoffen deutlich reduziert. Bestehende Infrastrukturen, wie z. B. Tankstellen, können weiterhin genutzt und in einer Übergangsphase von fossilen Kraftstoffen hin zur Bereitstellung der bevorzugten Energiequelle, insbesondere seiner Komponenten, modernisiert werden.

Insbesondere die Speicherung von Wasserstoff durch die Schaumanode der bevorzugten Energiequelle bzw. seines Aktivierungspotentials ermöglicht vorteilhaft unvergleichbar sichere Transport-, Lagerungs- und/oder Bereitstellungsmöglichkeiten gegenüber derzeitig angewandten Speicherungsmöglichkeiten.

Weiterhin ist es von besonderem Vorteil, dass durch die hohe Energiedichte neben höheren Reichweiten von BEVs auch die punktuelle Versorgung entlegener Orte, z. B. in Wüsten und/oder Krisengebieten, ermöglicht wird. Dabei ist der Verzicht auf schwer zugängliche und wartungsintensive Versorgungsleitungen ein dafür besonders großer Vorteil.

Der durchschnittliche Fachmann erkennt, dass technische Merkmale, Definitionen und Vorteile bevorzugter Ausführungsformen, welche für die bevorzugte Energiequelle gelten, auch für das bevorzugte System und die bevorzugte Verwendung gelten, und umgekehrt.

Die erfindungsgemäßen Aspekte sollen im Folgenden anhand von Beispielen näher erläutert werden, ohne auf diese Beispiele beschränkt zu sein.

### FIGUREN

### Kurzbeschreibung der Figuren

- **Fig. 1**: Schematische Darstellung einer bevorzugten Ausführungsform der erfindungsgemäßen Energiequelle
- **Fig. 2**: Messergebnisse einer Machbarkeitsstudie der erfindungsgemäßen Energiequelle

### Detaillierte Beschreibung der Figuren

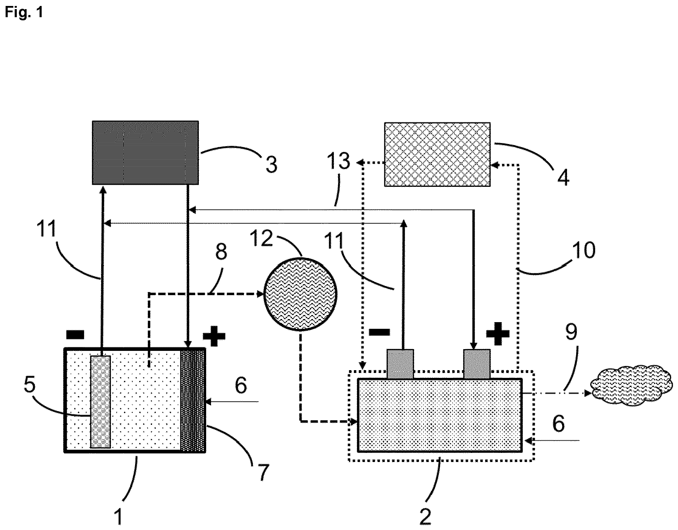

Fig. 1 dient der schematischen Darstellung einer bevorzugten Ausführungsform der erfindungsgemäßen Energiequelle.

Die Energiequelle weist eine Metall-Luft-Batterie **1** und eine Wasserstoff-Brennstoffzelle **2** auf.
Die Metall-Luft-Batterie **1** umfasst eine Schaumanode **5** und als Kathode eine Gasdiffusionselektrode **7.** Ferner liegt ein Fluidverbindungsmittel zwischen der Metall-Luft-Batterie **1** und der Wasserstoff-Brennstoffzelle **2** vor. Durch den Effekt der parasitären Korrosion entsteht an der Schaumanode **5** Wasserstoff **8,** der durch das Fluidverbindungsmittel in die Wasserstoff-Brennstoffzelle **2** einleitbar ist.

Die Energiequelle ermöglicht eine besonders hohe Energieausbeute bzw. einen hohen Wirkungsgrad. Der an sich leistungsmindernde Wasserstoff **8** für die Metall-Luft-Batterie **1** wird in die Wasserstoff-Brennstoffzelle **2** eingeführt, wobei durch eine Porenstruktur der Schaumanode **5** eine besonders hohe Wasserstoffproduktion durch parasitäre Korrosion ermöglicht wird, der für Wasserstoff-Brennstoffzelle **2** genutzt werden kann. Insbesondere kann durch die Porengröße die Wasserstoffproduktion und damit der Betrieb der Energiequelle optimiert werden, was von großem Vorteil ist. Ferner weist die Energiequelle eine geringe Masse durch die Porenstruktur der Schaumanode **5** auf, was für die Anwendungstauglichkeit, beispielsweise im Kontext von Fortbewegungsmitteln, von großem Nutzen ist. Die Energiequelle eignet sich in einer Vielzahl von Anwendungen und wirkt sich darin auch vorteilhaft aus. So wird es ermöglicht, bei BEVs noch höhere Reichweiten zu erzielen, als es derzeit im Stand der Technik möglich ist. Darüber hinaus ist die Energiequelle mit einfachen Mitteln und geringem Aufwand bereitstellbar, was sich ebenfalls vorteilhaft auf die Kosten- und Wirtschaftseffizienz auswirkt.

Darüber hinaus zeichnet sich die Energiequelle durch ihre Klimafreundlichkeit aus, da im Wesentlichen COz-neutral Energie bereitgestellt werden kann, da dieses nicht als Nebenprodukt in der chemischen Reaktion der Wasserstoff-Brennstoffzelle entsteht. Lediglich Wasser **9** bleibt als Produkt der Wasserstoff-Brennstoffzelle **2** übrig, was durch die Reaktion von Wasserstoff und Sauerstoff 6 aus der Umgebung resultiert.

Am Fluidverbindungsmittel ist eine Fluidsteuerungseinheit **12** angebracht, mit der es ermöglicht wird, den Transport des Wasserstoffes **8** zu regulieren. Hierbei kann eine Strömungsgeschwindigkeit und/oder die Menge des zugeführten Wasserstoffes **8** reguliert werden.

Die Energiequelle, insbesondere die Wasserstoff-Brennstoffzelle **2,** stellt elektrische Energie und Wärmeenergie bereit. Die Energiequelle ermöglicht vorteilhafterweise eine effiziente Nutzung beider Energieformen. In Fig. 1 ist dazu eine elektrische Verschaltung **13** sowie eine elektrische Ladung **11** eingezeichnet. Die elektrische Ladung **11** wird von der Schaumanode **5** der Metall-Luft-Batterie **1** zu einem elektrischen Verbraucher **3** geführt, während die elektrische Verschaltung **13** von der Wasserstoff-Brennstoffzelle **2** zum elektrischen Verbraucher **3** führt. Über Wärmeleiter **10** kann wiederrum Wärmeenergie für eine weitere Komponente bzw. Vorrichtung genutzt werden, beispielsweise für eine Heizung **4.**

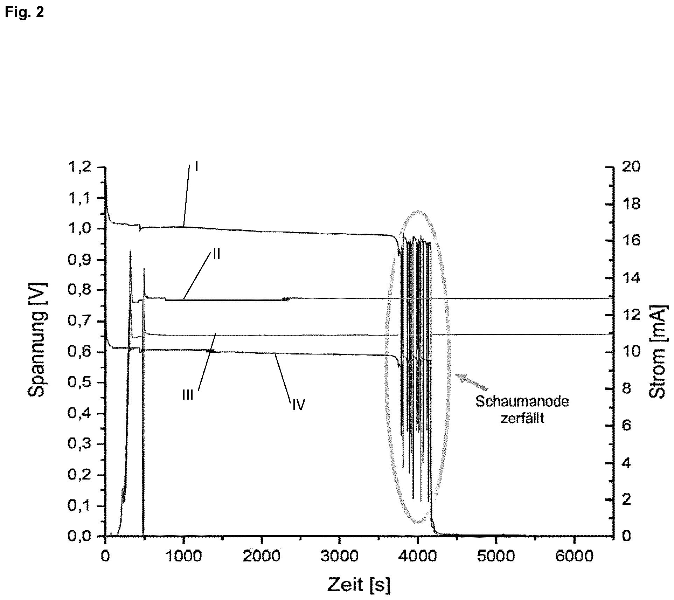

Fig. 2 zeigt Messergebnisse, die im Rahmen einer Machbarkeitsstudie der Erfindung aufgenommen wurden. Hierbei werden die elektrische Spannung [V] und der elektrische Strom [mA] gegen die Zeit [s] aufgetragen. Kurve I zeigt die Spannung der Metall-Luft-Batterie, Kurve II ist der Spannung der Wasserstoff-Brennstoffzelle gewidmet. Kurve III richtet sich an die Stromstärke der Wasserstoff-Brennstoffzelle und Kurve IV an die Stromstärke der Metall-Luft-Batterie.

Hierbei wurde eine Metall-Luft-Batterie verwendet, die eine Schaumanode umfassend Aluminium aufweist (Aluminiumschaum-Luft-Batterie). Die Aluminiumschaum-Luft-Batterie wird mit einer und mit einer gekauften Wasserstoff-Brennstoffzelle durch einen Schlauch verbunden. Über diesen Schlauch wird der entstandene H₂ von der Aluminiumschaum-Luft-Batterie zur Wasserstoff-Brennstoffzelle abgeleitet. Die Wasserstoff-Brennstoffzelle wird zusätzlich durch eine Pumpe mit O₂ versorgt.

An beide Spannungsquellen wurde jeweils ein Widerstand angeschlossen, so dass die elektrischen Spannungen und Ströme gemessen werden konnten. Der an der Wasserstoff-Brennstoffzelle angeschlossene Widerstand beträgt 51 Ω, während der an Aluminiumschaum-Luft-Batterie angeschlossene Widerstand 100 Ω beträgt.

Wie in Fig. 2 zu erkennen ist, baut die Aluminiumschaum-Luft-Batterie unmittelbar nach Zugabe des Elektrolyten (0,7L NaOH 4 mol/l - 4 N Maßlösung) eine Spannung auf. Entsprechend wird ein Strom gemessen. Sowohl die Spannung als auch der Strom werden bei geringfügig abfallender Tendenz, der Aluminiumoxidation geschuldet, kontinuierlich aufrechterhalten. Mit etwas Verzögerung beginnt auch die Wasserstoff-Brennstoffzelle eine Spannung aufzubauen und einen elektrischen Strom zu generieren, sodass die Machbarkeit der Erfindung definitiv gegeben ist. Die Verzögerung ist auf die Zeit zurückzuführen, die die Aluminiumschaum-Luft-Batterie benötigt, um genügend H₂, zu produzieren, so dass der Schlauch gefüllt und die Wasserstoff-Brennstoffzelle gespeist wird.

Nach ca. 1 h beginnt die Anode der Aluminiumschaum-Luft-Batterie umfassend 0,379 g AI-99,5-Schaum (ca. 10 mm x 9 mm x 18 mm) mit einer mittleren Stegdicke (zwischen den Poren) von 0,3 mm zu zerfallen. In Fig. 2 ist das an den Schwankungen von Strom und Spannung zu erkennen, was durch die Einkreisung und den Hinweis "Schaumanode zerfällt" verdeutlicht werden soll.

Dort verliert die Anode mehrmals kurzzeitig den Kontakt zum Ableiter aufgrund des Größenverhältnis von Anoden- und Porengröße zueinander. Nach ca. 1 h 10 min verliert die Aluminium-Schaumanode schließlich den Kontakt zum Ableiter und die Aluminiumschaum-Luft-Batterie kommt zum Erliegen.

Einzelne Aluminiumschaumstücke schwimmen nun noch im Elektrolyten und oxidieren weiter. Hier wird der Mehrwert der erfindungsgemäßen Energiequelle noch einmal verdeutlicht. Denn obwohl die Aluminiumschaum-Luft-Batterie bereits zum Erliegen kam, generiert der Aluminiumschaum im Elektrolyten aufgrund der Aluminiumoxidation weiterhin H₂, mit dem die Wasserstoff-Brennstoffzelle versorgt wird. Zu erkennen ist dies in Fig. 2 an dem gemessenen Strom und der Spannung, die bis zum Versuchsende ca. 0,5 h nach dem Erliegen der Aluminiumschaum-Luft-Batterie konstant aufrecht erhalten bleiben.

### Versuchsprotokoll zur Machbarkeitsstudie gemäß den Ergebnissen aus Fig. 2

### Aluminiumschaum-Luft-Batterie

### Anode:

- Material: Al 99,5 Schaum (Aluminiumanteil von mindestens 99,5 %)
- mittlere Stegdicke von 0,3 mm
- Masse: 0,379 g
- Abmessungen: 10 mm x 9 mm x 18 mm

### Kathode:

- Aktivkohle 1-3 mm, aus Torf, grau, dampfaktiviert Bruchkohle 1 kg
- Einsatzkorb für Einsatzgefäße SONOREX, Innendurchmesser 60 mm, Maschenweite 1 × 1 mm
- Rotilabo^{®}-Rundfilter Ø 90 mm, Dicke 0,16 mm, Typ 111A, Filtrierpapier für qualitative Analysen. Aus 100 % Cellulose, Aschegehalt 0,06 %., 100 Stck., sehr schnell filtrierend
- Graphitmien Ø 3,15 mm als Ableiter

### Elektrolyt:

- 0,7 L Natronlauge 4 mol/l - 4 N Maßlösung

### Widerstände:

- An der Metall-Luft-Batterie 100 Ω
- An der Wasserstoff-Brennstoffzelle 51 Ω

### Wasserstoff-Brennstoffzelle

- Reversible PEM-Brennstoffzelle, Abmessungen: 54 mm x 54 mm x 17 mm, Masse 70 g, Buchse 2 mm, Brennstoffzellenfunktion: Leerlaufspannung: 0,9 V, Max. Strom: 0,36 A, max. Leistung: 0,21 W, FIRMA LEYBOLD (LB Didactic)
- O₂-Zufuhr: Aquarienpumpe 100 l/h

### BZUGSZEICHENLISTE

- 1: Metall-Luft-Batterie
- 2: Wasserstoff-Brennstoffzelle
- 3: Elektrischer Verbraucher
- 4: Heizung
- 5: Schaumanode
- 6: Sauerstoff
- 7: Gasdiffusionselektrode
- 8: Wasserstoff
- 9: Wasser
- 10: Wärmeleiter
- 11: Elektrische Ladung
- 12: Fluidsteuerungseinheit für Transport für Wasserstoff
- 13: Elektrische Verschaltung

### LITERATURVERZEICHNIS

Girishkumar, Girish, et al. "Lithium- air battery: promise and challenges." The Journal of Physical Chemistry Letters 1.14 (2010): 2193-2203.
Armand, Michel, and J-M. Tarascon. "Building better batteries." nature 451.7179 (2008): 652-657.
Zhang, Tianran, Zhanliang Tao, and Jun Chen. "Magnesium-air batteries: from principle to application." Materials Horizons 1.2 (2014): 196-206.
Elia, Giuseppe Antonio, et al. "An overview and future perspectives of aluminum batteries." Advanced Materials 28.35 (2016): 7564-7579.
Rahman, Md Arafat, Xiaojian Wang, and Cuie Wen. "High energy density metal-air batteries: a review." Journal of the Electrochemical Society 160.10 (2013): A1759.
Egan, D. R., et al. "Developments in electrode materials and electrolytes for aluminium-air batteries." Journal of Power Sources 236 (2013): 293-310.
Cho, Young-Joo, et al. "Aluminum anode for aluminum-air battery-Part I: Influence of aluminum purity." Journal of Power Sources 277 (2015): 370-378.
Zhang, Tianran, Zhanliang Tao, and Jun Chen. "Magnesium-air batteries: from principle to application." Materials Horizons 1.2 (2014): 196-206.
Fan, Liang, Huimin Lu, and Jing Leng. "Performance of fine structured aluminum anodes in neutral and alkaline electrolytes for Al-air batteries." Electrochimica Acta 165 (2015): 22-28.
Ma, Yibin, et al. "Performance of Mg-14Li-1AI-0.1 Ce as anode for Mg-air battery." Journal of Power Sources 196.4 (2011): 2346-2350.
Dr. Oliver Ehret, Center of Automotive Management (CAM), Dossier Wasserstoff-und-Brennstoffzellen, NOW GmbH Nationale Organisation Wasserstoff- und Brennstoffzellentechnologie, 2018.
Wang, Lei, et al. "A hybrid aluminum/hydrogen/air cell system." International Journal of hydrogen energy 38.34 (2013): 14801-14809.

## Patentansprüche

1. Energiequelle umfassend
- eine Metall-Luft-Batterie (1) und
- eine Wasserstoff-Brennstoffzelle (2),
**dadurch gekennzeichnet, dass**
die Metall-Luft-Batterie (1) eine Schaumanode (5) aufweist und ein Fluidverbindungsmittel zwischen der Metall-Luft-Batterie 81) und der Wasserstoff-Brennstoffzelle (2) vorliegt, sodass ein an der Schaumanode (5) durch parasitäre Korrosion entstandener Wasserstoff (8) in die Wasserstoff-Brennstoffzelle (2) einführbar ist.

2. Energiequelle nach dem vorherigen Anspruch
**dadurch gekennzeichnet, dass**
die Schaumanode (5) ein Material umfasst ausgewählt aus einer Gruppe umfassend Eisen oder ein Leichtmetall, wobei bevorzugt das Leichtmetall ausgewählt ist aus einer Gruppe umfassend Zink, Magnesium, Aluminium, Verbindungen und/oder Legierungen der genannten Leichtmetalle.

3. Energiequelle nach einem oder mehreren der vorherigen Ansprüche
**dadurch gekennzeichnet, dass**
die Schaumanode (5) eine mittlere Stegdicke aufweist zwischen 0,1 - 5 mm, bevorzugt zwischen 0,1 - 1 mm, besonders bevorzugt zwischen 0,1 - 0,5 mm, ganz besonders bevorzugt von 0,3 mm.

4. Energiequelle nach einem oder mehreren der vorherigen Ansprüche
**dadurch gekennzeichnet, dass**
die Schaumanode (5) einen Reinheitsgrad aufweist zwischen 80 - 100 %, bevorzugt zwischen 97 - 99 %, besonders bevorzugt zwischen 99 - 99,9 %, ganz besonders bevorzugt von 99,5 %.

5. Energiequelle nach einem oder mehreren der vorherigen Ansprüche
**dadurch gekennzeichnet, dass**
das Fluidverbindungsmittel ausgewählt ist aus einer Gruppe umfassend einen Schlauch und/oder ein Rohr.

6. Energiequelle nach einem oder mehreren der vorherigen Ansprüche
**dadurch gekennzeichnet, dass**
die Metall-Luft-Batterie (1) und die Wasserstoff-Brennstoffzelle (2) als separate Komponenten vorliegen, wobei bevorzugt die separaten Komponenten räumlich getrennt voneinander angebracht sind.

7. Energiequelle nach einem oder mehreren der vorherigen Ansprüche
**dadurch gekennzeichnet, dass**
die Energiequelle eine Fluidsteuerungseinheit (12) aufweist, wobei die Fluidsteuerungseinheit (12) am Fluidverbindungsmittel, zwischen dem Fluidverbindungsmittel und der Luft-Metall-Batterie (1) und/oder zwischen dem Fluidverbindungsmittel und Wasserstoff-Brennstoffzelle (2) vorliegt,
wobei bevorzugt die Fluidsteuerungseinheit (12) ausgewählt ist aus einer Gruppe umfassend eine gasdurchlässige und flüssigkeitsdichte Membran, ein Ventil und/oder eine erste Pumpe.

8. Energiequelle nach einem oder mehreren der vorherigen Ansprüche
**dadurch gekennzeichnet, dass**
die Wasserstoff-Brennstoffzelle (2) mit einem Wärmeleiter (10), bevorzugt einem Wärmetauscher, verbunden ist.

9. Energiequelle nach einem oder mehreren der vorherigen Ansprüche
**dadurch gekennzeichnet, dass**
die Energiequelle eine zweite Pumpe aufweist, wobei durch die Pumpe Sauerstoff in die Brennstoffzelle einführbar ist.

10. System umfassend einen Energiewandler und eine Energiequelle nach einem oder mehreren der Ansprüche 1-9, wobei der Energiewandler und die Energiequelle miteinander wirkverbunden sind, wobei bevorzugt der Energiewandler ein Motor ist, besonders bevorzugt ein Elektromotor.

11. System nach Anspruch 10
**dadurch gekennzeichnet, dass**
das System einen Wärmeleiter (10), bevorzugt einen Wärmetauscher aufweist, wobei eine Wasserstoff-Brennstoffzelle (2) der Energiequelle mit dem Wärmeleiter (10), bevorzugt dem Wärmetauscher, verbunden ist.

12. Verwendung der Energiequelle nach einem oder mehreren der vorherigen Ansprüche 1-9 in einem Bayer-Verfahren zur Herstellung von Aluminium.

13. Verwendung der Energiequelle nach einem oder mehreren der vorherigen 1 - 9 für einen Betrieb einer stationären, teilstationären und/oder dynamischen Vorrichtung,
wobei bevorzugt die statische Vorrichtung ausgewählt ist aus einer Gruppe umfassend ein Kraftwerk, ein Generator, ein Motor und/oder eine Batterie,
wobei bevorzugt die teilstationäre Anwendung ein Baugerät ist, bevorzugt ein Kran und/oder ein Bagger,
wobei bevorzugt die dynamische Vorrichtung ein Fortbewegungsmittel ist, bevorzugt ausgewählt aus einer Gruppe umfassend ein PKW, LKW und/oder Bus.
